# EUROPEAN PATENT SPECIFICATION

(11) **EP 0 516 590 B1**
(45) Date of publication and mention of the grant of the patent: **16.10.1996**
(21) Application number: 92810395.1
(22) Date of filing: 26.05.1992
(51) Int. Cl.: A01N 49/00, A01N 53/00, A01N 25/00

(54) **Flea control method**
Methode zur Bekämpfung von Flöhen
Méthode de lutte contre les puces

(30) Priority: 31.05.1991 US 709003
(43) Date of publication of application: 02.12.1992
(73) Proprietor: SANDOZ LTD., 4002 Basel (CH); SANDOZ-PATENT-GMBH, 79539 Lörrach (DE); SANDOZ ERFINDUNGEN VERWALTUNGSGESELLSCHAFT M.B.H., 1235 Wien (AT)
(72) Inventor: Chatfield, Ronald Curtis, Keller, TX 76248 (US); Donahue, William Arthur, Dallas, TX 75287 (US); Gladney, William Jess, McKinney, TX 75070 (US)

(56) References cited:
- EP-A- 0 346 544
- US-A- 4 518 593
- CHEMICAL ABSTRACTS, vol. 106, no. 11, 16 March 1987, Columbus, OH (US); L.M. EL-GAZZAR et al., p. 222, no. 80316c
- CHEMICAL ABSTRACTS, vol. 113, no. 9, 27 August 1990, Columbus, OH (US); M.K. RUST et al., p. 267, no. 72973u
- CHEMICAL ABSTRACTS, vol. 108, no. 13, 28 March 1988, Columbus, OH (US); M.K. RUST et al., p. 233, no. 108122d
- CHEMICAL ABSTRACTS, vol. 91, no. 11, 10 September 1979, Columbus, OH (US); G.W. BENNET et al., p. 237, no. 85120r
- CHEMICAL ABSTRACTS, vol. 104, no. 23, 09 June 1986, Columbus, OH (US); J.T. LANG et al., p. 298, no. 202269w
- CHEMICAL ABSTRACTS, vol. 104, no. 17, 28 April 1986, Columbus, OH (US); L.M. EL-GAZZAR et al., p. 239, no. 143919h; and W.L.A. OSBRINK et al., p. 239, no. 143920b
- CHEMICAL ABSTRACTS, vol. 98, no. 3, 17 January 1983, Columbus, OH (US); G.N. CLARK et al., p. 197, no. 12899m

## Description

The present invention concerns a method of controlling or eliminating pest-infestation of domestic animals which employs the animals themselves as vectors for pest control agents.

Parasitic insects such as ticks, lice and especially fleas which infest pets such as cats and dogs are a major source of concern. Apart from infesting animals with eggs which hatch and feed off the animal's blood and/or flesh they transmit a variety of infectious diseases.

In the control of such parasites various treatments are employed using various types of insecticides applied both to the pet's habitat and in certain cases to the pet itself.

The most effective insecticides for treating these parasites and especially fleas are insect growth regulators (IGR) such as chitin synthesis inhibitors, ecdysone agonists and especially juvenile hormone analogues and/or mimics. Examples include methoprene, hydroprene, kinoprene, fenoxycarb, fluphenacur, cyromazine, chlorfluazuron, hexaflumuron, diflubenzuron, flucycloxuron, teflubenzuron, flufenoxuron, triflumuron, pyriproxyfen. N- [[[3,5-dichloro-4-(3,4,5-trichloro-pyrazol-1-yl)phenyl]amino]carbonyl]-2-chlorobenzamide, or mixtures of suitable IGRs such as these. IGR's, unlike traditional pesticides, do not kill insects directly. Methoprene for example acts by disrupting the flea's development to such an extent as to be fatal on larvae. In common with other IGRs it also has an ovicidal effect and prevents hatch and/or development of eggs when applied directly or to adults. IGRs thus prevent the development of future generations and especially if used with an adulticide such as a pyrethroid or pyrethrin prevent reinfestation.

In spite of recent improvements in pet parasite control brought about by the introduction of IGRs serious problem exist in achieving a cost-effective treatment of all areas to successfully prevent reinfestation and thus retreatment.

One particular problem involves the identification and treatment of all so-called "hot-spots" i.e. those areas favored by the pet for sleeping or resting such as bedding, carpet areas, tops of cupboards, under beds, and the like.

Indiscriminate treatment of all possible areas would involve large amounts of pesticide and studies have shown that the survival of flea larvae in the untreated state is significantly limited to the areas most frequently visited by the pet (Robinson & Byron 1988, The Cat Flea and its Control, National Pest Control Association).

It has now surprisingly been found that effective and long-lasting parasite, especially flea control on pets, can be obtained by using the pet itself as the vector for applying the control agent.

The present invention therefore concerns a method for the control of parasites of domestic animals which comprises applying to the animal a parasite control agent in an amount sufficient to in turn transfer to the animal's environment an amount of that insect control agent which is sufficient to control said parasites.

As mentioned above the insect control agent is preferably an IGR most preferably methoprene or (S)-methoprene. When employing an IGR the amount sufficient for control is that which will inhibit the development of the immature stages of the parasite in the pet's environment such as in carpets, pet-bedding and the like.

Examples of parasites which may be controlled include ticks, lice and especially fleas such as cat fleas, dog fleas, sticktight flea, human fleas, rat flea and other rodent fleas, bird fleas, etc.

Treatment of this nature is particularly useful in controlling fleas in cats and dogs but can also be used on birds and livestock.

The amount of active ingredient employed will depend on the severity of infestation, product used, animal involved, mode of application and the like but can be readily determined by the man skilled in the particular art by routine experimentation.

Thus by way of example when employing IGRs the amount applied to the animal may be the same as or less than that usually employed for parasite control by direct application on the animal itself or its environment. When using the IGR (S)-methoprene for example concentrations of 0.001% to 0.2%, especially 0.01% to 0.2% applied as a dip was sufficient to prevent adult flea emergence in carpet and pet bedding areas.

When employing IGRs in the method according to the invention it is advantageous that they be employed together with an adulticide such as a natural pyrethrin or a low-toxicity pyrethroid. Examples include pyrethrins, permethrin, bioallethrin, resmethrin, chlorpyrifos, carbaryl, propoxur, naled, phosmet, limonene, linalool, cythioate, malathion.

Obviously compounds used in the method according to the invention preferably are non-toxic to domestic animals such as pets e.g. methoprene and (S)-methoprene.

Whilst "on-animal" treatment alone may be feasible, dual application may be preferred for securing against reinfestation and for preventative and "clean-up" applications.

In the method according to the invention the control agent may be applied as is or in a diluted form in known manner e.g. as a dip, spray, foam, dust, grease or pour-on. Dips are not applied per se, but the animals immersed in a dipping bath containing the dip wash. Sprays may be applied by hand e.g. in aerosol form. Dusts may be distributed over the animals by means of a powder gun. Pastes and greases may be applied manually. Pour-on formulations are dispensed as a unit of liquid of small volume onto the backs of animals such that all or most of the liquid is retained on the animals.

The control agents may be formulated either as formulations ready for use on the animals or as formulations requiring further dilution prior to application, but both types of formulations comprise active ingredient (a.i.) in intimate admixture with one or more carriers or diluents. The carriers may be liquid, solid or gaseous or comprise mixtures of such substances and the a.i. may be present in a concentration of from 0.025 to 99% w/v depending upon whether the formulation requires further dilution.

Dusts may be prepared by intimate admixture of the chosen a.i. with a powdered solid inert carrier for example suitable clays, kaolin, talc, mica, starch and diatomaceous earths.

Sprays may comprise a solution in an organic solvent or an emulsion in water (dip wash or spray wash) prepared in situ from an emulsifiable concentrate which may also be used for dipping purposes. The concentrate preferably comprises a mixture of the active ingredient, an organic solvent and one or more emulsifiers. Solvents may be present in wide limits but preferably in an amount of from 20 to 60% w/v of the composition and may be selected from kerosene, ketones, alkanols, xylene, aromatic naphtha, and other solvents known in the formulating art. The concentration of emulsifiers may be varied within wide limits but preferably in the range of 5 to 25% w/v and are conveniently non-ionic surface active agents including polyoxyalkylene esters of alkyl phenols and polyoxyethylene derivatives of hexitol anhydrides.

Dip washes may be prepared not only from emulsifiable concentrates but also from wettable powders comprising an a.i. in intimate admixture with a dispersing agent and one or more surface active agents.

Greases (or ointments) may be prepared from vegetable oils, synthetic esters of fatty acids or wool fat together with an inert base such as soft paraffin. An a.i. is preferably distributed uniformly through the mixture in solution or suspension. Greases may also be made from emulsifiable concentrates by diluting them with an ointment base.

Pastes are also semi-solid preparations in which an a.i. may be present as a uniform dispersion in a suitable base such as soft or liquid paraffin or made on a non-greasy basis with glycerin, mucilage or a suitable soap. As greases and pastes are usually applied without further dilution they should contain the appropriate percentage of the a.i. required for treatment.

Aerosol sprays may be prepared as a simple solution of the a.i. in the aerosol propellant and a co-solvent such as halogenated alkanes and the solvents or suspension of an a.i. in a liquid medium which also contains a viscous oil to minimize spreading of the formulation on the surface of the animals.

The concentration of the a.i. to be applied to an animal will vary according to the a.i. chosen, the nature of the formulation and the likely infestation, but in general 0.025% to 1% w/v of the compound should be present in the applied formulation. It will be understood that the amount of the compound deposited on an animal will vary according to the method of application, size of the animal, hair length, concentration of the compound in the applied formulation and the nature of the formulation.

Dusts, greases, pastes and aerosol formulations are usually applied in a random fashion as described above and concentrations of 0.5 to 1.0% w/v of an a.i. formulation may be used.

Commercially available formulations such as PETCOR®, OVITROL®, (Zoecon Corporation) and the like may be used in concentrations suitably adjusted for the new use.

The following examples illustrate the invention without in any way restricting same.

### EXAMPLE 1

### Control of Ctenocephalides felis in cats and their environment

### Test Material

Dips are prepared with an inverse emulsion of a.i. (see below) to give the desired final concentrations thereof by mixing the concentrate with water at 4 oz/gallon (126g/3.78ℓ) dilution rates. A dip containing 0% a.i. is also prepared as control.

### Test Method

Thirty healthy non-infested cats of mixed breed and varying hair lengths and color with approximately equal sex ratios are employed. The cats are placed, 3 pairs/treatment in chambers (ca 4ft x8ft x8in) (1.2m x 2.4m x 0.2m) which contain a medium pile carpet on the floor and on a raised resting area. The cats are provided with litter pan, food and water in line with normal animal husbandry. Before introducing the treated animals larval flea media (1 part dried beef blood to 5 parts ground dry cat chow is mixed 1:1 with sand) is prepared and ca. 250 g/chamber spread over the carpet and brushed in.

Cats are fully dipped in the dip and after shaking off are returned to the chambers. Two 7inx7in (ca 18cm x 18cm) carpet samples (one from floor, one from resting area) are taken on a weekly basis from each chamber.

### Biological Evaluation

Two (2) 3½in (ca 8.9cm) carpet circles are cut from each sample and placed in the bottom of a 1 pint (470 ml) paper ice cream carton. Carpet circles are also cut from clean untreated carpet and set up as untreated controls. The tops are fitted with a sheer fabric to allow air flow into the cup and easy observation of emerging adult fleas. Flea eggs are collected from C. felis. One hundred healthy appearing flea eggs from C. felis are counted under a dissecting microscope and placed on top of the carpet in each cup. For the untreated control carpet samples flea media and sand are added to the carpet before the eggs are put in. The samples are covered and incubated at approximately 80 degrees Fahrenheit (ca 27°C) with approximately 75-85% relative humidity and a 12 hour photoperiod for 3 weeks. The carpet samples are then gleaned for adult fleas. This is accomplished by rubbing the fingers vigorously over the carpet to dislodge adults and stimulate any remaining adults to emerge from the cocoon.

On employing (S)-methoprene in the above tests at a concentration of 0.05% produced 100% inhibition of adult flea emergence up to 6 weeks after treatment.

### EXAMPLE 2

### Formulations

### a) Spray

| | Ingredients | (W/W%) |
|---|---|---|
| i) | Pyrocide Intermediate* 5192 | 2.2 |
| ii) | (S)-Methoprene (90%) | 0.29 |
| iii) | MGK Repellent 11 (95.0%)* | 0.44 |
| iv) | Isopropyl Alcohol | 61.52 |
| v) | Deionized water | 35.5 |

| | | |
|---|---|---|
| *i) 9% Pyrethrins, 18% Piperonyl Butoxide and 30% N-Octyl bicycloheptene (McLaughlin Gormley King Co., Minneapolis, MN). | | |
| *iii) McLaughlin Gormley King Co., Minneaolis, MN | | |

### b) Dip

| | Ingredients | (W/W%) |
|---|---|---|
| i) | active ingredients | 12.5 |
| ii) | Sponto N-140-B* | 13.5 |
| iii) | Tergitol 15-5-20* | 1.5 |
| iv) | SureSol 190* | 72.5 |

| | | |
|---|---|---|
| *ii) Blended (anionic/nonionic) emulsifier (Witco Chemical Corp., Houston, TX) | | |
| *iii) Non- ionic surfactant (Union Carbide Co., Danbury, CT) | | |
| *iv) Aromatic Solvent (Koch Chemical Co., Corpus Christi, TX) | | |

## Claims

1. A method for the control of parasites of domestic animals which comprises applying to the animal a parasite control agent in an amount sufficient to in turn transfer to the animal's environment an amount of that insect control agent which is sufficient to control said parasites in that environment.

2. A method according to Claim 1 wherein the parasite control agent comprises an insect growth regulator.

3. A method according to Claim 2 wherein said parasite control agent is selected from methoprene or (S)-methoprene.

4. A method according to Claim 1 wherein the parasite control agent additionally comprises an adulticide.

5. A method according to Claim 4 wherein said adulticide is selected from pyrethrins, permethrin, bioallethrin, resmethrin, chlorpyrifos, carbaryl, propoxur naled, phosmet, limonene, linalool, cythioate, malathion.

6. A method according to Claim 1 wherein the parasites are fleas.

7. A method according to Claim 1 wherein the domestic animals are cats or dogs.

8. A method according to Claim 1 wherein the parasite control agent is applied as a dip.

## Patentansprüche

1. Ein Verfahren zur Bekämpfung von Parasiten an Haustieren, welches das Aufbringen eines Parasitenbekämpfungsmittels auf das Tier in einer Menge umfasst, welche ausreichend ist, um seinerseits an den Lebensraum des Tieres eine Menge des Insektenbekämpfungsmittels weiterzugeben, die ausreicht, um besagte Parasiten in dem Lebensraum zu bekämpfen.

2. Ein Verfahren gemäss Anspruch 1, worin das Parasitenbekämpfungsmittel einen Insektenwachstumsregulator umfasst.

3. Verfahren gemäss Anspruch 2, worin das Parasitenbekämpfungsmittel ausgewählt ist unter Methoprene und (S)-Methoprene.

4. Verfahren gemäss Anspruch 1, worin das Parasitenbekämpfungsmittel zusätzlich ein Adultizid enthält.

5. Verfahren gemäss Anspruch 4, worin das Adultizid ausgewählt ist unter Pyrethrinen, Permethrin, Bioallethrin, Resmethrin, Chlorpyrifos, Carbaryl, Propoxur, Naled, Phosmet, Limonen, Linalool, Cythioate, Malathion.

6. Verfahren gemäss Anspruch 1, worin die Parasiten Flöhe sind.

7. Verfahren gemäss Anspruch 1, worin die Haustiere Katzen oder Hunde sind.

8. Verfahren gemäss Anspruch 1, worin das Parasitenbekämpfungsmittel als Tauchbad appliziert wird.

## Revendications

1. Une méthode de lutte contre des parasites des animaux domestiques qui comprend l'application à l'animal d'un agent de lutte contre des parasites en une quantité suffisante pour transférer à son tour à l'environnement de l'animal une quantité de cet agent de lutte contre des insectes qui est suffisante pour lutter contre lesdits parasites dans cet environnement.

2. Une méthode selon la revendication 1, dans laquelle l'agent de lutte contre des parasites comprend un régulateur de la croissance des insectes.

3. Une méthode selon la revendication 2, dans laquelle ledit agent de lutte contre des parasites est choisi parmi le méthoprène ou le (S)-méthoprène.

4. Une méthode selon la revendication 1, dans laquelle l'agent de lutte contre des parasites comprend également un adulticide.

5. Une méthode selon la revendication 4, dans laquelle ledit adulticide est choisi parmi les pyréthrinoïdes, la perméthrine, la bioalléthrine, la resméthrine, le chlorpyrifos, le carbaryl, le propoxur, le naled, le phosmet, le limonène, le linalool, le cythioate, le malathion.

6. Une méthode selon la revendication 1, dans laquelle les parasites sont des puces.

7. Une méthode selon la revendication 1, dans laquelle les animaux domestiques sont des chats ou des chiens.

8. Une méthode selon la revendication 1, dans laquelle l'agent de lutte contre des parasites est appliqué par immersion.
